# EUROPEAN PATENT APPLICATION

(11) **EP 3 912 886 A1**
(43) Date of publication of application: **24.11.2021**
(21) Application number: 21164309.3
(22) Date of filing: 23.03.2021
(51) Int. Cl.: B62B 5/04, B62B 9/08

(54) **LOCKING/UNLOCKING DEVICE AND HAND-PROPELLED VEHICLE COMPRISING SAID LOCKING/UNLOCKING DEVICE**

(30) Priority: 19.05.2020 IT 202000011611
(71) Applicant: L'Inglesina Baby S.p.A., 36077 Altavilla Vicentina (VI) (IT)
(72) Inventor: GORZA, Roberto, 36077 Altavilla Vicentina (IT); MARCHIORI, Nicola, 36077 Altavilla Vicentina (IT); TOMASI, Ivan, 36077 Altavilla Vicentina (IT)
(74) Representative: Gonella, Mario

(57) **Abstract**

A locking/unlocking device for locking/unlocking at least one wheel of a hand propelled vehicle comprising a frame, said locking/unlocking device comprises:
- a rotatable element (20) integral in rotation with said wheel, said rotatable element (20) comprising a locking surface (50);
- a non-rotatable element (14) which can be associated with the chassis of the vehicle;
- a semi-rotatable element (15) which is hinged to the non-rotatable element (14);
- a locking lever which comprises a locking pin (40);
said semi-rotatable element (15) being able to rotate according to a first rotation about a first rotation axis (30);
said locking lever being able to rotate according to a second rotation about a second rotation axis;
the first axis of rotation (30) being distinct from the second axis of rotation;
said locking pin (40) being able to selectively cooperate with the locking surface (50) of the rotatable element (20), so that the relative positions of the rotatable element (20) and of the non-rotatable element (14) are lockable to obtain a wheel locked configuration, or unlockable to obtain a wheel unlocked configuration.

A hand-pushed vehicle comprises at least one such locking/unlocking device for obtaining the locking/unlocking of at least one wheel of said vehicle.

## Description

### TECHNICAL FIELD OF THE INVENTION

The present invention relates to a locking/unlocking device for braking hand-pushed vehicles such as strollers, baby carriages and others, and to a hand-pushed vehicle comprising said locking/unlocking device, for example a stroller or baby carriage.

The invention finds application in the industrial production of locking/unlocking devices and/or braking systems for hand-pushed vehicles, strollers and the like.

### STATE OF THE TECHNIQUE

During normal use of hand-pushed vehicles, such as strollers and baby carriages, there is a need to allow the user to lock and/or unlock, in a simple and effective way, one or more wheels with locking/unlocking or braking devices.

Nowadays, the devices used to block the rotation of the wheels around their own axis (braking devices) generally consist of a control pedal, normally hinged to a support structure of the wheel, or of the group of wheels. The control pedal supports an engagement peg or pin of cylindrical or other shape, so that when the user acts on the control pedal, the engagement peg is moved to engage in a seat or slot defined on a ring nut integral with the wheel, so as to obtain the block of the wheel itself.

For example, cylindrical engagement pegs are known that develop in a direction parallel to the axis of rotation of the wheel, but with two different translational movements to go from locking to unlocking and vice versa.

In the European patent granted EP1590225B1 a first known movement of the engagement pin is disclosed, i.e. a translation in a direction orthogonal to the axis of the wheel. To obtain the block, the pin is moved closer to the wheel axis to engage in a seat obtained between two consecutive radial teeth of a toothed wheel and vice versa it is moved away from the wheel axis to exit from said seat and thus obtain the release of the wheel itself. The toothed wheel is constrained to rotate with the wheel to be locked or braked. The engagement and disengagement therefore take place with a movement in a radial direction with respect to the wheel concerned.

A second known movement is that which sees the engagement pin translate in a direction parallel to the axis of the wheel. In this typology, the cylindrical engagement pin is moved in an axial direction with respect to the wheel concerned.

An example of said second movement is disclosed in US2007051565A1 in which the user to brake pushes a pedal which then rotates, dragging in rotation a disc on which a plurality of inclined planes is obtained. An inclined plane progressively pushes the engagement pin towards the wheel in an axial direction. The disc with the inclined plane rotates integral with the pedal around the wheel axis, while the cylindrical engagement pin can only translate in a direction parallel to the wheel axis. The inclined plane therefore describes surfaces that move away from or approach the wheel, so as to push the engagement pin into a seat obtained in the wheel hub to obtain the block or allow the pin to be pushed out of the same seat by means of a return spring, depending on the angle of rotation of the pedal.

Another example of a device for locking/unlocking the wheel of a stroller is disclosed in EP3266675, in which there is a locking actuator, shaped like a pedal, and also a locking release, shaped like a pedal button, both made at the right wheel of the stroller. The user must therefore first operate the pedal to obtain the block and then the pedal button, located near the pedal, to obtain the release. However, the pedal and the pedal button are too close together to be easily controlled by the user, who is required to move his foot with high precision to reach one or the other, causing frustration and difficulty in use.

Inside, the mechanism includes many elements that transmit motion to obtain its complex functioning; some elements are dedicated exclusively to obtaining the lock while other elements are exclusively dedicated to obtaining the unlocking.

This constructive solution has several components and a complexity of operation and assembly which leads to higher costs and possible breakages compared to the previous examples. It also has an inclined plane similar to the previous examples.

The cited examples of prior art also have closed engagement seats which may have accumulations of dust, such as to create malfunctioning of the brake.

Some solutions available on the market act on the same pedal, pressing it to lock and lifting it to unlock, thus requiring the user to take an action that is not intuitive and difficult to understand. Furthermore, if the user has bare feet or is wearing an open shoe such as a slipper, sandal or other, to unlock the lever, he must lift the lever with his foot, getting annoyed, dirty and/or damaging the back of the foot or toes.

### SUMMARY OF THE INVENTION

The main task of what forms the subject of the present invention is to overcome the drawbacks of the known art by devising a locking/unlocking device for hand-pushed vehicles, such as strollers or the like, which allows locking/unlocking one or more wheels to obtain effective braking of the vehicle itself, which can be easily operated by a user.

Within the scope of the aforementioned task, an object of the present invention is to devise a locking/unlocking device which allows to obtain an effective and safe braking of a vehicle pushed by hand in the various operating conditions in which it comes to be.

A further object is to devise a locking/unlocking device, in particular a braking system, obtainable with as few components as possible, without compromising its integrity or functionality.

Yet another object is to devise a locking/unlocking device which can be used easily by different users, without having to learn complex procedures to be able to use it.

Not least object is to devise a locking/unlocking device which achieves the aforementioned aim and objects at competitive costs and can be obtained with the usual and known plants, machinery and equipment.

The aforementioned aim and objects, and others which will become clearer hereinafter, are achieved by a locking/unlocking device for a hand pushed vehicle as defined in claim 1 and by a hand pushed vehicle, for example a vehicle pushed by hand for children, in particular a stroller, as defined in claim 8.

### BRIEF DESCRIPTION OF THE FIGURES

Further characteristics and advantages of the present invention will become more evident from the following description of a particular, but not exclusive, embodiment illustrated purely by way of non-limiting example with reference to the attached drawing tables, in which:
- Figures 1A to 1D show schematic views of a locking/unlocking device according to the invention;
- Figure 2 shows an exploded view of a locking/unlocking device according to the invention;
- Figure 3 shows an exploded view of two elements of a locking/unlocking device according to the invention;
- Figure 4 shows an internal side view of a locking/unlocking device according to the invention;
- Figures 4A to 4D show schematic views of two locking/unlocking devices according to the invention, each in two different configurations of use;
- Figure 5 shows an internal top view of a locking/unlocking device according to the invention;
- Figures 5A to 5C show lateral or sectional views of a locking/unlocking device according to the invention, in different configurations of use;
- Figures 6 and 7 show an exploded view of two elements of a locking/unlocking device according to the invention, from two different points of view;
- Figure 8 shows an element of a locking/unlocking device according to the invention;
- Figure 9 shows an internal view of some elements of a locking/unlocking device according to the invention, assembled together;
- Figure 10 shows a schematic view of a portion of a vehicle pushed by hand, made according to the invention;

### DETAILED DESCRIPTION OF THE INVENTION

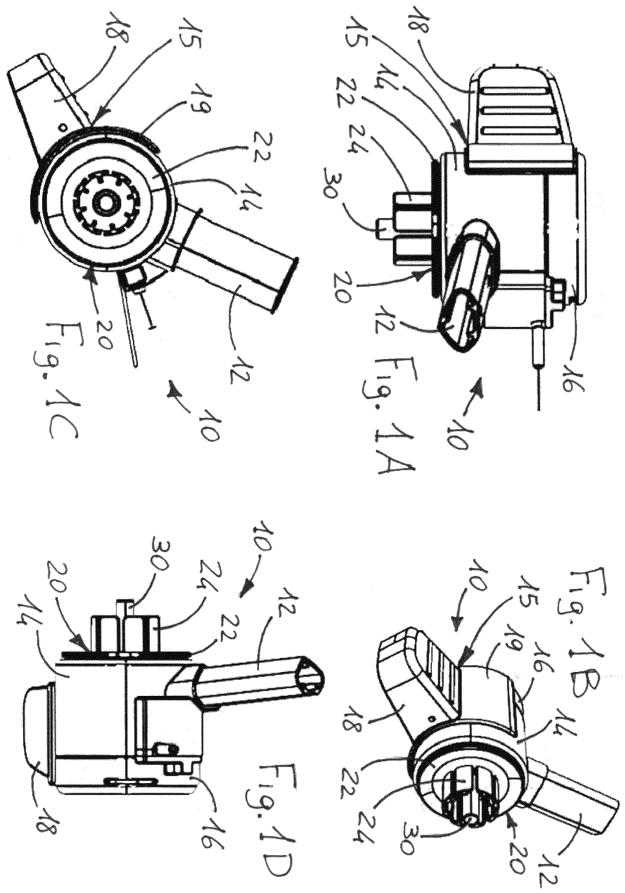

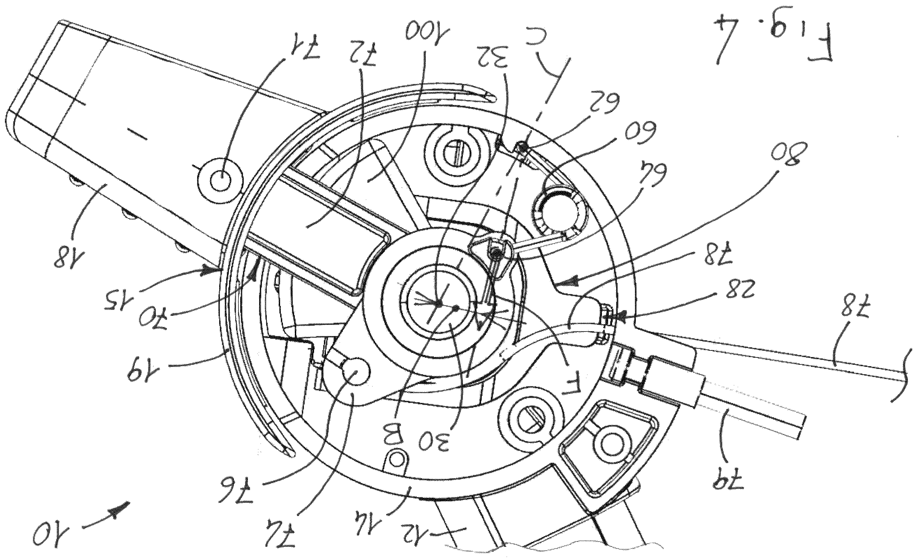

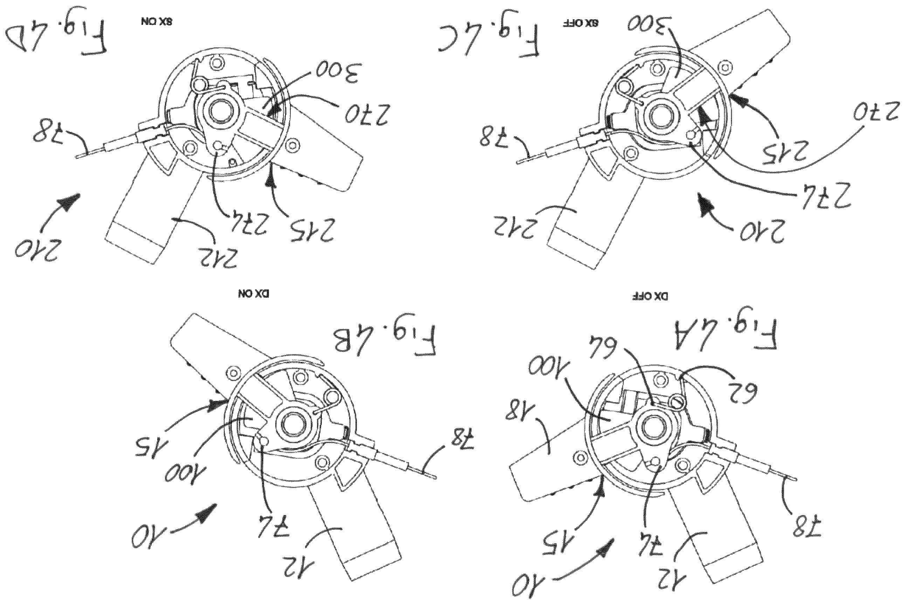

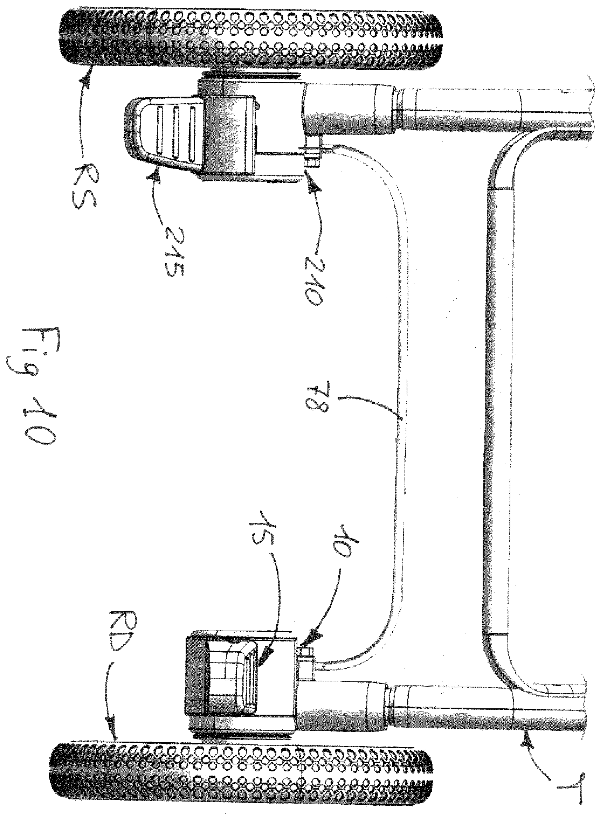

Figures 1A to 1D show a locking/unlocking device 10 of a wheel associated with one end of the rear axle of a hand-pushed vehicle, for example a stroller, which comprises one or two rear wheels, such as visible in figure 10. Figures 1A to 9 show the locking/unlocking device 10 of the right rear wheel, with the exception of figures 4C and 4D, which show the construction of the locking/unlocking device of the left rear wheel. Being similar to each other, their construction and operation will be clear from the following description, with the relative advantages with respect to the known art. Furthermore, the invention can also be applied by inverting the construction and operating characteristics of the right side with the left side and vice versa.

The locking/unlocking device 10 comprises a main body 14, having a substantially cylindrical shape, from which a male sleeve 12 protrudes, adapted to be inserted into a leg tube of the stroller frame, not visible in the figure.

In this embodiment, the locking/unlocking device 10 is formed integrally (at least in part) with the male sleeve 12, but obviously the locking/unlocking device 10 of the wheel can be directly associated with the stroller frame with some means and/or connecting elements, without the male sleeve 12.

A locking/unlocking control 15, a side cover 16 and a rotating element 20 are associated with the main body 14 of the locking/unlocking device 10.

The locking/unlocking control 15 comprises a pedal portion 18 and a lid portion 19. A user of the locking/unlocking device 10 can act on the pedal portion 18 to operate it and obtain the locking and/or unlocking of the respective wheel or wheels, as described below.

As shown in Figure 1B, the rotatable element 20 comprises a discoidal body 22 from which protrude a plurality of fins 24, for example eight, (hereinafter only fins 24) arranged circularly around an axle 30. Axle 30 passes through the rotating element 20 itself to cooperate with other elements inside the main body 14. The fins 24 and the axle 30 are able to be inserted into the hub of the respective rear wheel (not visible), so that the rotatable element 20 is integral in rotation with the respective rear wheel which rests on the ground. The axle 30 defines a first axis of rotation. Hereinafter, the first axis of rotation will be referred to as an axis of rotation which coincides with the axis of rotation of the axle 30. Of course, constructive variants are possible in which the first axis of rotation is parallel to the axis of rotation of the axle 30 or is inclined with respect to the axis of rotation of axle 30.

The rotating element 20 and the axle 30 are free to rotate independently of each other.

In other words, when the rotatable element 20 is mounted on the hub of the respective wheel via the fins 24, since the wheel is rotated, the rotatable element 20 will also be rotated; its rotation is caused exclusively by the rotation of the respective associated wheel.

Alternatively, the rotatable member 20 can be formed as an integral part of the wheel hub.

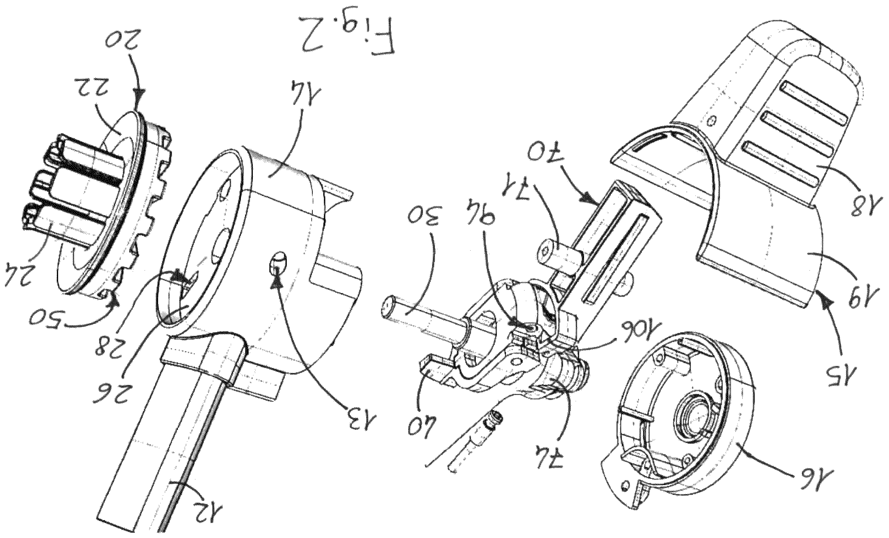

A clear view of the configurations between the elements described above is visible in the exploded view in figure 2, in which other internal elements are also visible, described below.

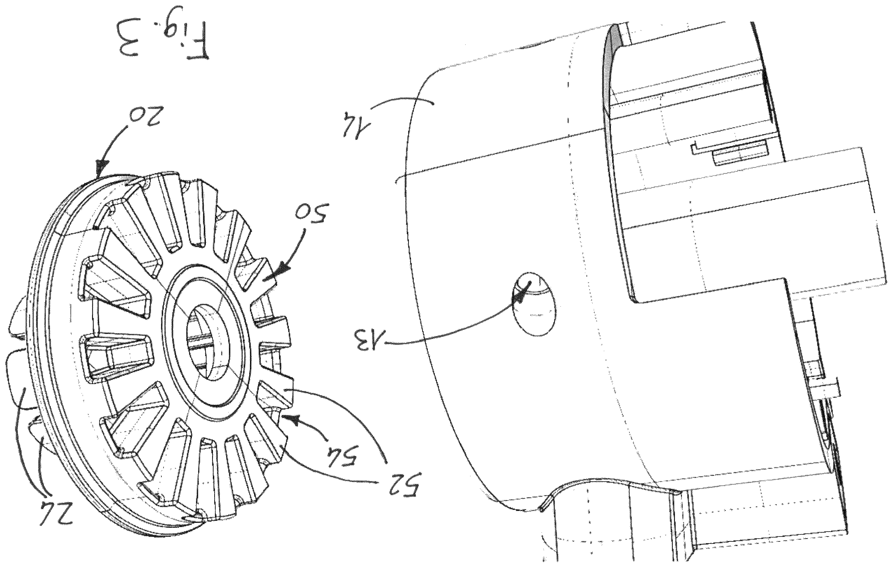

The disc-shaped body 22 comprises a circular outer edge which is close to the outer surface of the main body 14 and an inner edge which surrounds the axle 30. The disc-shaped body 22 of the rotatable element 20 has the shape of an annular element having two opposite annular surfaces, which form an external face, from which the fins 24 protrude and an internal face in which a locking surface 50 is formed, visible in Figure 3 and described below.

As can be seen in Figure 2, a door 28 is formed on a wall 26 of the main body 14 to allow the passage of a locking pin 40. The wall 26 faces the locking surface 50 of the rotating element 20. Thanks to the presence of suitably sized wall 26 and door 28, the entry of dust and other unwanted material into the main body 14 is prevented.

As can be seen in Figure 3, the locking surface 50 has the shape of a toothed surface having a plurality of teeth 52, with recesses 54 formed between two adjacent teeth 52. The teeth 52 and the recesses 54 develop in the axial direction to the element 20.

As can be seen in Figure 4, the main body 14 is a non-rotating element, as it is associated with the vehicle frame by means of the male sleeve 12. The locking/unlocking control 15, on the other hand, is a semi-rotating element, mounted in an elastic way on the main body 14.

By "semi-rotatable" we mean that the rotation of the semi-rotatable element is limited, that is, it is not freely rotatable by 360°. In fact, the semi-rotating element can only be rotated by an angle of less than 180° and preferably less than 90°, as described below.

The locking/unlocking control 15 is associated with an elongated body 72 of a control rod 70 by means of a coupling 71, preferably a screw or rivet. The elongated body 72 is inserted inside a cavity obtained in the pedal portion 18. The control rod 70 is rotatably pivoted to the axle 30, so as to rotate integrally with the pedal portion 18, when the latter is pressed or however moved by a user. In other words, the control rod 70 is also a semi-rotating element, which can rotate around the first axis of rotation. Of course, the control rod 70 can also be arranged to rotate around an axis of rotation which is parallel to the first axis of rotation or which is inclined with respect to the first axis of rotation.

A first helical spring 60 connects an external anchor 62, obtained in the internal surface of the main body 14, with an internal anchor 64, obtained on the control rod 70. The first helical spring 60 is an example of an elastic element, but obviously any other suitably elastic means having an elastic action to connect the semi-rotating element to the non-rotatable element can be used, i.e. it is possible to use another elastic element that engages on the external anchor 62 and on the internal anchor 64.

The construction and configuration of the first helical spring 60 has been specifically designed to obtain a bistable behavior, i.e. the same first helical spring 60 pushes on the internal anchor 64 in a different direction each time, depending on the relative position of the same internal anchor 64 with respect to the junction line C which connects the geometric center 32 of the axle 30 with the external anchor 62.

In the configuration visible in Figure 4, in which the pedal portion 18 is in its pressed configuration, the first helical spring 60 pushes on the internal anchor 64 with a thrust force F which imposes a clockwise rotation of the control rod 70, as it generates a torque having an intensity equal to the thrust force F multiplied by its arm B. The direction of the thrust force F is identified by the straight line passing between the external anchor 62 and the internal anchor 64, visible in figure 4 to the left of the joining line C. Arm B is defined as the distance between the direction of the thrust force F of the spring passing through the internal anchor 64, and the geometric center 32 of the axle 30.

When the pedal portion 18 is in a raised configuration, visible in Figure 4A, the first coil spring 60 pushes on the internal anchor 64 with a thrust force which imposes a counterclockwise rotation of the control rod 70, with the advantageous effect of maintaining and/or recalling the pedal portion 18 in the raised configuration. The direction of the thrust force F of the spring is in fact to the right of the junction line C, since the position of the external anchor 62 is the same as shown in figure 4, while the position of the internal anchor 64 is passed to the right of the junction line C due to the rotation of the control rod 70 around the axle 30, as can be seen in Figure 4A.

Further details on the action of the first helical spring 60 will be described below and this bistable behavior will be resumed to illustrate a particularity of the locking/unlocking device 10 according to the invention.

In the patent EP1590225 of the same owner, incorporated herein by reference, a bistable spring is shown having a similar behavior depending on the angle of rotation.

Returning to Figure 4, the control rod 70 comprises a cable pulling element 74, in a single body, to which an end 76 of a cable 78 is associated which allows two locking/unlocking devices to be connected, as described below, to obtain the locking and/or unlocking of both the respective rear wheels to which they are associated by means of the command of a single locking/unlocking device by the user.

The cable 78 preferably passes through a cable grommet 79 to exit from the main body 14. Even if in figure 4 and in other figures the cable 78 is not shown as passing through the cable grommet 79, it is understood that the cable 78 can conveniently pass through the cable grommet 79.

The cable pulling element 74 is made to keep the end 76 of the cable 78 at a constant distance from the geometric center 32 of the axle 30, by rotating the end 76 by the same angle of rotation as the control rod 70 with respect to the axle 30, thus performing a rotation around the first axis of rotation.

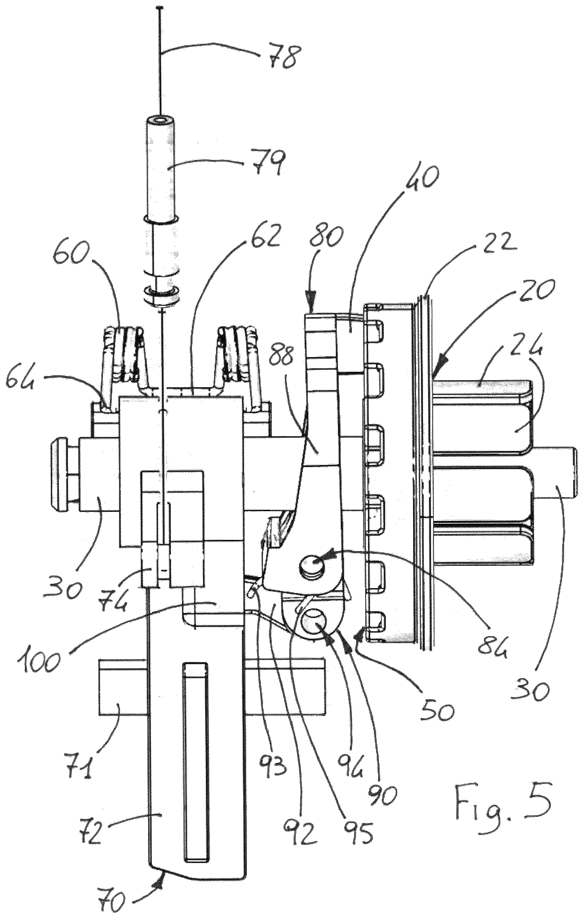

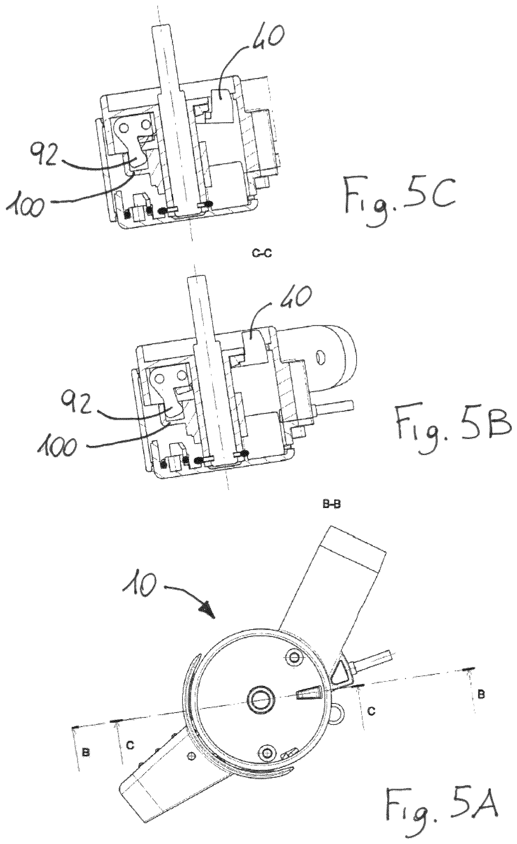

As can be seen in Figure 5, a locking pin 40 is hinged inside the main body 14 (hidden in this figure), the locking pin 40 being able to selectively cooperate with the locking surface 50 of the rotating element 20, so that the relative positions of the rotating and non-rotating elements are lockable. In fact, with reference to the wheel as a rotating element with an axis of rotation parallel to the left-right direction of the stroller, the locking pin 40 cannot be rotated around the axis of rotation of the wheel. The locking pin 40 is pivoted to rotate about a second axis of rotation, distinct from the first axis of rotation, as described below. This second axis of rotation is substantially orthogonal with respect to the axis 30, but it is understood that the inclination between the first axis of rotation and the second axis of rotation can assume a different angle than 90 degrees.

All the internal elements and their relationships which transform the semi-rotation of the pedal portion 18 into movement of the locking pin 40 are described below.

The control rod 70 includes an arched guide 100 inside which a foot 92 of a preload lever 90 is inserted, said preload lever 90 being pivoted to the main body 14 by means of a first pin, not visible in the figure, said first pin passing through a first hole 94 obtained in the preload lever 90 itself and a hole 13 (visible in the figures 2 and 3) obtained in the main body 14. The first pin defines a third axis of rotation, passing through the center of the first hole 94 and consequently also passing through the center of the hole 13.

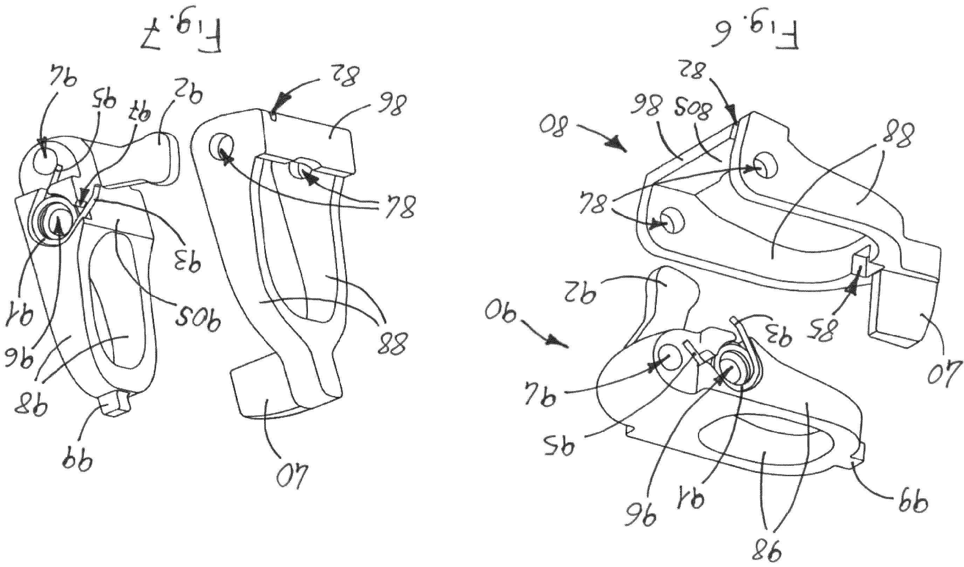

Returning to Figure 5, a locking lever 80 is in turn pivoted to the preload lever 90 by means of a second pin (not visible) which passes through a second hole 96 obtained in the preload lever 90 (visible in the figures 6 and 7) and through a third hole 84 obtained in the locking lever 80. The second axis of rotation is defined as an axis passing through the center of the third hole 84 and consequently also passing through the center of the second hole 96.

A preload spring 91 is housed inside the preload lever 90 and around the second hole 96. The preload spring 91 has a first end 93 and a second end 95.

As visible in Figures 5B and 5C, both being sectional views of Figure 5A, depending on the conditions of use and the relative rotations between the internal elements, the locking pin 40 can be in different configurations, as will be described below.

As visible in the exploded view of figures 6 and 7, the first end 93 of the preload spring 91 rests inside a groove 82 obtained in a base 86 of the locking lever 80.

Furthermore, the first end 93 of the preload spring 91 can move inside a preload seat 97 obtained in the preload lever 90 in proximity to the second hole 96, so as to allow a predetermined movement of the same first end 93 and consequently allow a predetermined relative rotation between the preload lever 90 and the locking lever 80, as described below.

With reference to Figures 6 and 7, the locking lever 80 comprises two arms 88 which start from the base 86 to culminate in an arch at the top of which the locking pin 40 protrudes.

The preload lever 90 also comprises two arms 98, which extend away from the second hole 96, to form an arch, from whose upper end a head 99 protrudes.

In other words, the two arms 88 and the two arms 98 respectively form forks inside which the axle 30 can be inserted, without coming into contact with the arms 88 or 98 themselves, thus allowing a sturdy and robust construction of the locking lever 80 and of the preloading lever 90. At the same time a reduction of the spaces required for the mechanism is advantageously obtained with respect to the known art, keeping the locking/unlocking device according to the invention very compact.

The fact of having a compact mechanism has the advantage of reducing the risk that the user collides with his foot while moving the vehicle. Furthermore, compared to a known hub without a braking system, it does not have a greater bulk.

The third hole 84 is obtained in both the two arms 88, near the base 86. A seat 85 is obtained at the top of the arch formed by the two arms 88, under the locking pin 40. The seat 85 is suitably shaped to accommodate the head 99 of the preload lever 90 and thus obtain a first relative rotation limit switch of the preload lever 90 with respect to the locking lever 80. As can be seen, the position of the seat 85 so close to the locking pin, it allows to obtain a very easy return of the locking lever 80, as described below.

A second limit switch is that obtained from the contact between the surface 80S of the locking lever 80 and the surface 90S of the preload lever 90.

The particular construction just described, with respect to the preload lever 90 and the locking lever 80, allows to obtain a limited relative rotation between them, limited by two limit switches and having a relative rotation axis passing through the second hole 96 and the third hole 84, when they are aligned with each other, as in the configuration visible in Figure 5.

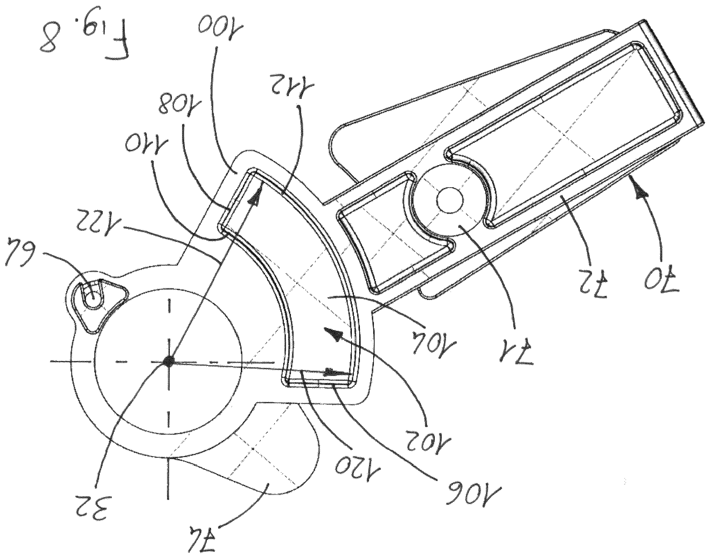

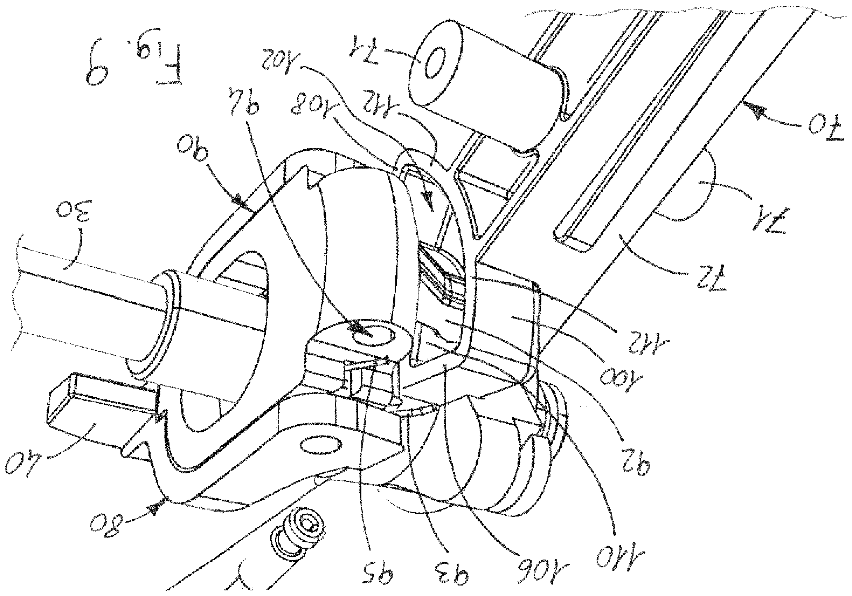

With reference to figures 8 and 9, the arched guide 100 of the control rod 70 will be described below.

The arched guide 100 is formed by a cavity 102 formed in a single body in the control rod 70. The arched guide 100 comprises a floor 104 delimited by a near edge 106, a far edge 108, an internal arch 110 and an external arch 112. The floor 104 lies on a plane substantially orthogonal to the main axis of the axle 30 and faces the rotatable element 20.

The external arc 112 is an arc of circumference that has a different center than the geometric center 32 of the axle 30, or in other words, has a variable radius with respect to the geometric center 32 of the axle 30, so as to be able to guide the foot 92 of the preload lever 90 according to the relative angle of rotation of the rod control 70 with respect to the main body 14 of the locking/unlocking device 10. The internal arc 110 is preferably also realized in a similar way.

It is therefore noted how the shape of the arched guide 100 develops helically with respect to the center 32 of the first axis of rotation.

In figure 8 a locking radius 120 near the near edge 106 and an unlocking radius 122 near the far edge 108 are indicated, in which the locking radius 120 has a shorter length than the unlocking radius 122.

The angle between the near edge 106 and the far edge 108 is less than 90 degrees. The elongated body 72 develops in a direction that is about half the angle between the near edge 106 and the far edge 108.

The near edge 106 preferably has the same length as the far edge 108. Referring to the geometric center 32, the distance between the inner arch 110 and the outer arch 112 is constant and predetermined, to allow the insertion of the foot 92 of the preload lever 90 inside the cavity 102 with a coupling with little play, to properly guide the same foot 92.

The foot 92 of the preload lever 90 is preferably shaped with a shape specifically designed to allow a shape coupling between the arched guide 100 and the foot 92 itself.

Furthermore, this shape coupling has been designed to allow contact between the foot 92 and the external arch 112 or between the foot 92 and the internal arch 110 and, at the same time, to maintain a distance between the foot 92 and the floor 104. The foot 92 does not in fact come into contact with the floor 104.

In other words, the foot 92 and therefore the preload lever 90, are guided in their movement exclusively and alternatively by the external arch 112 or by the internal arch 110.

Thanks to this construction, the wear due to friction of the contact elements is at least halved compared to the prior art. In fact, in the known art contact occurs constantly with a single inclined plane both for the locking movement and for the release movement, while in the device according to the invention the contact occurs alternately between the external arc 112 and the internal arc 110.

In fact, referring to Figure 9 as a block configuration, in which the foot 92 is in proximity to the near edge 106, when the control rod 70 is rotated clockwise with respect to the axle 30, the foot 92 is pushed by the internal arc 110 so as to move away from the geometric center 32. The preload lever 90, being pivoted to the main body 14 by means of the pin in the first hole 94, is constrained to a third rotation around the third axis of rotation.

Continuing the clockwise rotation of the control rod 70, a release configuration will be reached (visible in figure 4A), in which the foot 92 will be in proximity to the far edge 108. In this release configuration the preload lever 90 will be rotated with respect to its own axis passing through the first hole 94 and, by means of the first limit switch (head 99 and seat 85) will have also dragged the locking lever 80 and consequently extracted the locking pin 40 from its respective recess 54 of the locking surface 50, so as to obtain a release and free the rotation of the rotatable element 20 and therefore the rotation of the respective wheel of the hand-pushed vehicle.

Below are the movements, starting from a release configuration (visible in Figure 4A), in which the foot 92 of the preload lever 90 is located in proximity to the far edge 108. By rotating the control rod 70 and as a consequence of the arched guide 100, it is obtained that the external arch 112 pushes the foot 92 to approach the geometric center 32 of the axle 30. In this way the whole preload lever 90 is made to rotate around the third axis of rotation passing through the first hole 94. In other words, the preload lever 90 comprises the foot 92 shaped to be associated with a shape coupling with the arched guide (100), so that a first rotation of the semi-rotatable element 15 corresponds to a proportional third rotation of the preload lever 90. Rotating the preload lever 90 results in rotation of the first end 93 of the preload spring 91 which pushes on the groove 82 obtained in the base 86 of the locking lever 80. The locking lever 80 is then forced to rotate around the second axis of rotation (passing through the holes 96 and 84) and preferably obtain a locking configuration (visible in Figure 5B) with the coupling between the locking pin 40 and a recess 54 of the locking surface 50, or an intermediate preload configuration (visible in Figure 5C), described below.

In fact, depending on the relative rotation between the rotating element 20 and the locking pin 40, passing from an unlocking configuration to a locking configuration, as previously described, a momentary condition may occur in which the locking pin 40 is facing a tooth 52 and not a recess 54. This condition leads to the intermediate preload configuration of figure 5C, in which the locking pin 40 is pushed to pass through the door 28, but abuts against a tooth 52 of the locking surface 50.

In the intermediate preload configuration, the foot 92 is pushed to the position near the near edge 106 of the arched guide 100 and then the preload lever 90 is rotated fully. The locking lever 80, on the other hand, stops its rotation when the locking pin 40 comes into contact with the tooth 52 of the locking surface 50 and a situation is thus obtained in which the preload lever 90 is completely rotated, while the locking lever 80 is only partially rotated and continues to be pushed by the first end 93 of the preload spring 91.

This intermediate preload configuration is advantageously maintained, thanks to the thrust of the first helical spring 60 which is in the configuration of figure 4, in which it maintains a torque useful to keep the control rod 70 in the position in which it is found in the figure.

If there were not the first helical spring 60 in fact, the preload spring 91 would tend to bring the preload lever 90 backwards. Thanks to the thrust of the first helical spring 60, the intermediate preload configuration (Figure 5C) is then maintained until the rotatable element 20 is rotated by an angle sufficient to bring in front of the locking pin 40 a recess 54 into which it can be inserted, thus obtaining a lock configuration (Figure 5B).

This is very advantageous, for example in the case in which a user has to press the pedal portion 18 to obtain the block and at the same time the locking pin 40 faces a tooth 52, because the user can fully press down the pedal portion 18 and the first helical spring 60 will maintain the intermediate preload configuration even when the user has stopped pressing the pedal portion 18, thus ensuring that the intention to brake the vehicle is realized, to following a slight rotation of the wheel itself. The slight rotation is less than the limit rotation defined by current legislation. Another advantage is that of being able to obtain the intermediate preload configuration for one or both wheels of the vehicle.

According to a variant of the invention, the preload spring 91 is optional. In other words, the preload lever 90 and the locking lever 80 can be obtained in a single body, further simplifying the construction and obtaining the intermediate preload configuration thanks to the first helical spring 60 only. In this variant the second axis of rotation is to coincide with the third axis of rotation, i.e. the locking lever rotates around the third axis of rotation, in a single body with the preload lever.

With reference to Figure 10, a hand-pushed vehicle is now described, for example a stroller, comprising a frame T and two locking/unlocking devices according to the invention communicating with each other through the cable 78. A first locking/unlocking device 10, which comprises a first locking/unlocking command 15, is associated with a right rear wheel RD of the vehicle, while a second lock/unlock device 210, which comprises a second locking/unlocking command 215, is associated with a left rear wheel RS of the vehicle.

For ease of illustration, reference will be made to the elements of the second locking/unlocking device 210 with a numerical reference corresponding to the respective element of the first locking/unlocking device 10 described above, to which 200 is added.

According to the invention, the second locking/unlocking device 210 comprises the same elements described above, but assembled in a different way, to obtain the advantageous behavior described below. In particular, with reference to Figures 4A to 4D, the particular configuration of the second locking/unlocking device 210 is understood.

Compared to the first locking/unlocking device 10, the only element that requires a modified construction within the second locking/unlocking device 210 is the control rod 270 which has an arched guide 300 and a modified cable pulling element 274.

For example, the cable pulling element 74, integral with the element 70, in figure 4A and 4B is facing upwards in an up-down direction of the stroller, as well as the respective cable pulling element 274 of the second locking/unlocking device 210.

All the other internal elements of the second locking/unlocking device 210 are advantageously the same as those present in the first locking/unlocking device 10. For example, the locking/unlocking command 215 remains the same as the respective locking/unlocking command 15 , as can be seen in Figures 4C and 4D, to keep the non-slip surface of the pedal portion 218 upwards, i.e. towards the foot of a user who wishes to press it downwards.

In other words, the locking/unlocking command 15, the preload lever 90, the locking lever 80, the first helical spring 60, the preload spring 91 and each of their relative sub-elements previously described, are perfectly interchangeable between the first locking/unlocking device 10 and the second locking/unlocking device 210, i.e. between the right and left locking/unlocking devices.

An important advantage is thus obtained in terms of interchangeability and savings in the construction of the elements, since the total number of components is reduced with respect to devices according to the prior art which provide internal elements dedicated only to the right device or to the left device.

In this way, a configuration of the two locking/unlocking devices is obtained which can be defined with opposing pedals, or with opposed locking/unlocking commands. As can be seen in figure 10, in fact, the lock/release command 15 is in a position away from the respective ground on which the wheel RD can rest, i.e. in a configuration that is not pressed or raised, while the lock/release command 215 is in a position approaching the ground, that is, in a pressed configuration.

At the same time, even if the pedals are opposed, inside the two locking/unlocking devices, the elements described above and their operation act in a synchronous and not opposed way.

In other words, in the configuration visible in figure 10, the locking/unlocking commands are opposite, i.e. one (215) in the pressed configuration and the other (15) in the not pressed configuration, while inside the respective device the locking pins are both in the unlocking configuration, i.e. the locking pins are not engaged with their locking surface and both the RD and RS wheels of the stroller are free to rotate.

When the user wants to lock or brake the stroller, he conveniently acts on the first locking/unlocking command 15, for example by pressing it down with his foot, or towards the ground. Consequently, it moves all the internal elements described above, so that the locking pin 40 of the locking/unlocking device 10 preferably fits into a recess 52 of the locking surface 50 or alternatively presses against a tooth 54, up to when a small rotation of the right rear wheel RD allows the locking pin 40 to enter the recess 52 immediately downstream or upstream of the tooth 54, obtaining in any case a locking configuration, as desired by the user.

The cable pulling element 74 acts on the cable 78, pulling it towards the first locking/unlocking device 10 itself and away from the second locking/unlocking device 210. Inside the second locking/unlocking device 210, the end of the cable 276 which is associated with the cable pulling element 274 rotates the control rod 270 and consequently rotates the preload lever 290. The latter tends to push the locking lever 280 into rotation to engage the locking pin 240 with a recess 252 of the locking surface 250 of the second locking/unlocking device 210, in a similar way to what has just been described for the first locking/unlocking device 10.

Of course also for the second locking/unlocking device 210 it is preferable to pass directly from an unlocking configuration to a locking configuration in which the locking pin 240 fits into a recess 252, but it is also acceptable that temporarily the locking pin 240 presses against a tooth 254 and then temporarily remains in an intermediate preload configuration, before reaching a locking configuration.

In other words, when the user presses the pedal of the first lock command 15, he rotates the control rods 70,270 at a sufficient angle to bring them into the equilibrium configuration (visible in figure 4). The first helical springs 60,260 therefore push all the other elements with a torque that tends to rotate towards the locking position. Therefore, if even a single locking pin 40,240 is at that moment facing a tooth 54,254, it will soon be able to enter the nearest recess 52, 252 as soon as the stroller or baby carriage is moved.

Such movement can be achieved, in part, by a gentle push of the stroller in a forward or backward direction to provide the additional amount of rotation required to cause the locking pin 40 to align with a recess 52 and lock into place inside.

The locking of the wheel is thus effectively obtained with a minimum rotation and in any case lower than the regulatory provisions.

Due to the particular assembly described above, it is obtained that both wheels RD, RS are locked and the pedals are still opposite each other. In fact, the first locking/unlocking command 15 will be pressed downwards while the second locking/unlocking command 215 will remain raised upwards (not visible in the figure).

When the user wants to unlock or remove the brake from the stroller, he conveniently acts on the second locking/unlocking command 215, for example by pressing it downwards with his foot, or towards the ground. Consequently, it moves all the internal elements, so that the locking pin 240 of the second locking/unlocking device 210 comes out of the respective recess 252 of the locking surface 250, thus obtaining an unlocking configuration, as desired by the user.

The cable pulling element 274 acts on the cable 78, this time pulling it towards the second locking/unlocking device 210 itself and away from the first locking/unlocking device 10. Inside the first locking/unlocking device 10, the end of the cable 76 which is associated with the cable pulling element 74 rotates the control rod 70 and therefore the arched guide 100. Consequently, the preload lever 90 rotates which, thanks to the first limit switch, calls back the locking lever 80 to extract the locking pin 40 from the respective recess 52 of the locking surface 50.

A considerable saving in production costs is thus obtained, since the construction of the locking/unlocking device according to the invention is substantially the same, only by changing the control rod 70 with a suitable control rod 270, such as described above.

The fact of being able to obtain both the locking and the release of the wheels, by means of a push action with the foot downwards, solves the problem of bare feet or open footwear, such as sandals or flip-flops, unlike the known art.

Unlike the known art, therefore, in which there is an inclined plane that pushes a locking element, in the locking/unlocking device according to the invention the arched guide 100 moves the foot 92 of the preloading lever 90 by acting laterally. The unified construction of the components described above is thus made possible for both the first (10) and the second (210) locking/unlocking device, with the exception of the control rod only. Therefore a considerable saving is obtained due to the smaller number of molds to make the components and other advantages.

Unlike the prior art, the selective movement of the first locking command 15 rotates both locking pins 40,240 in cooperation with the respective locking surfaces 50,250 so that the relative positions of the rotating elements 20,220 and of the non-rotatable elements 14,214 are lockable, i.e. the locking configuration is obtained and therefore the braking of the stroller.

Furthermore, the subsequent command by the user on the second locking command 215 of the second locking/unlocking device 210 causes the locking pins 40,240 to rotate out of cooperation with the respective locking surfaces 50,250, so such that the relative positions of the rotating elements 20,220 and of the non-rotatable elements 14,214 are unlockable.

In this way, the user can conveniently use a single foot, both to obtain the lock of the stroller, and to obtain its release, by acting alternatively on the appropriate locking/unlocking command from time to time, further facilitated by the vision of the pedal that is raised or pressed at that moment, thus also being able to understand with a simple glance whether the stroller is locked or not.

The invention preferably has two pedals made with different colors and/or graphics, for example one green and the other red, or with writings such as stop and go, so that for the user is much easier to choose the correct pedal to act on to obtain the desired behavior.

Another advantage of the invention is that of having recesses 54 of the locking surface 50 (visible in Figure 3) of the open type. The dust is thus discharged better, with respect to the seats of the known art.

Of course the cable 78 is only an example of connection between two or more locking/unlocking devices and other links or connecting means can also be used, such as a rigid rod or so on.

According to a variant of the invention, in fact, a rigid bar can directly connect the two control rods 70,270, so as to obtain a concordant operation with synchronous levers. In other words, the two control rods 70,270 can be found both in a configuration pressed downwards or both in a configuration raised upwards, with respect to the ground on which the wheels of the hand-pushed vehicle rest.

In this variant, therefore, the user can act indifferently to the right or to the left to lock or unlock the wheels of the hand-pushed vehicle.

Of course, the present invention is susceptible of numerous applications, modifications or variations without thereby departing from the scope of protection as defined by independent claim 1.

Furthermore, the materials and equipment used for making the present invention, as well as the shapes and dimensions of the individual components, may be the most suitable according to specific requirements.

## Claims

1. A lock/unlock device (10,210) for locking/unlocking at least one wheel (RS,RD) of a hand-pushed vehicle comprising a frame (T), said lock/unlock device (10,210) comprising:
- a rotatable element (20) integral in rotation with said wheel (RS,RD), said rotatable element (20) comprising a locking surface (50);
- a non-rotatable element (14) that can be associated with the vehicle frame (T);
- a semi-rotatable element (15) which is pivoted to the non-rotatable element (14);
- a locking lever (80) which includes a locking pin (40);
said semi-rotatable element (15) being able to rotate according to a first rotation around a first rotation axis (30);
said locking lever (80) being able to rotate according to a second rotation around a second rotation axis (84);
the first rotation axis (30) being distinct from the second rotation axis (84);
said locking pin (40) being adapted to selectively cooperate with the locking surface (50) of the rotating element (20), whereby the relative positions of the rotating element (20) and the non-rotatable element (14) are lockable to obtain a wheel lock configuration, or unlockable to obtain a wheel unlock configuration,
**characterized in that** said semi-rotatable element (15) further comprises an arched guide (100) in turn comprising at least one arch (110;112) suitably shaped to move the locking lever (80) towards a wheel unlock configuration or towards a wheel lock configuration, so that a first rotation in a direction of the semi-rotatable element (15) causes a second rotation respectively in a direction or in the opposite direction of the locking lever (80) proportional to said first rotation.

2. Lock/unlock device (10,210) according to the preceding claim, wherein said arched guide (100) comprises an internal arc (110) and an external arc (112),
said internal arch (110) being shaped to move the locking lever (80) towards a wheel unlock configuration when the semi-rotatable element (15) rotates in one direction and
said outer arch (112) being shaped to move the locking lever (80) towards a wheel lock configuration when the semi-rotatable element (15) rotates in a direction opposite to the previous one.

3. Lock/unlock device (10,210) according to one of the preceding claims, wherein the arched guide (100) comprises a floor (104) delimited by a near edge (106) and a far edge (108),
wherein the shape of the arched guide (100) develops in a helix with respect to the center (32) of the first rotation axis (30) of the semi-rotatable element (15), i.e. with a variable radius with respect to the first rotation axis (30),
so that the near edge (106) is at a less distance from the first rotation axis (30) than the far edge (108).

4. Lock/unlock device (10,210) according to one of the preceding claims, which also includes a preload lever (90) which is pivoted to the non-rotatable element (14) being able to rotate according to a third rotation around a third rotation axis,
said preload lever (90) being interposed between the arched guide (100) and the locking lever (80) to release the second rotation of the locking lever (80) from the first rotation of the semi-rotatable element (15), to allow to keep the locking lever (80) in preload and to allow an intermediate preload configuration to be obtained, said preload lever (90) comprising a foot (92) shaped to be associated with shape coupling with the arched guide (100), so that a first rotation of the semi-rotatable element (15) corresponds to a proportional third rotation of the preload lever (90).

5. Lock/unlock device (10,210) according to the preceding claim, wherein at least one choosed between the locking lever (80) and the preload lever (90) is shaped like a fork that surrounds the first rotation axis (30) comprising two arms (88;98) which culminate in an arch.

6. Lock/unlock device (10,210) according to claim 4 or 5, wherein the preload lever (90) comprises a spring (91) housed inside the preload lever (90), said preload spring (91) comprising a first end (93) and a second end (95),
said first end (93) being free with respect to the preload lever (90) and pushing on a groove (82) obtained in the locking lever (80) and
said second end (95) being constrained to the preload lever (90).

7. Lock/unlock device (10,210) according to one of claims 5 to 6, wherein the locking lever (80) is recalled by means of a head (99) of the preload lever (90) which engages in a seat (85) formed in the locking lever (80),
said head (99) and said seat (85) respectively being obtained at the upper end of the arch of the respective fork.

8. Hand-pushed vehicle comprising at least one lock/unlock device (10,210) according to one of claims 1 to 7 for locking/unlocking at least one wheel (RS,RD) of said vehicle.

9. Hand-pushed vehicle according to the preceding claim, comprising two rear wheels (RS,RD) and in which a first lock/unlock device (10) has its own rotating element (20) associated with one (RD) of said two rear wheels and wherein a second lock/unlock device (210) has its own rotatable element (220) associated with another (RS) of said two rear wheels,
the semi-rotatable element (15) of the first lock/unlock device (10) being connected by a cable (78) to the semi-rotatable element (215) of the second lock/unlock device (210) so that a first rotation in a direction of the semi-rotatable element (15) of the first lock/unlock device (10) causes a rotation in the opposite direction of the semi-rotatable element (215) of the second lock/unlock device (210),
to allow locking of both the two rear wheels by rotating the semi-rotatable element (15) of the first lock/unlock device (10) or alternatively the release of both the two rear wheels by rotating the semi-rotatable element (215) of the second lock/unlock device (210), i.e. obtaining operation with opposite commands to control the locking or unlocking of the two rear wheels (RD,RS) of the hand-pushed vehicle.

10. Hand-pushed vehicle according to claim 8, comprising two rear wheels (RS,RD) and in which a first lock/unlock device (10) has its own rotatable element (20) associated with one (RD) of said two rear wheels and wherein a second lock/unlock device (210) has its own rotatable element (20) associated with another (RS) of said two rear wheels,
the semi-rotatable element (15) of the first lock/unlock device (10) being connected via a rigid bar to the semi-rotatable element (215) of the second lock/unlock device (210) so that a first rotation in a direction of the semi-rotatable element (15) of the first lock/unlock device (10) causes a rotation in the same direction of the semi-rotatable element (215) of the second lock/unlock device (210),
to allow locking or unlocking of both rear wheels respectively by rotating the semi-rotatable element (15) of the first lock/unlock device (10) or rotating the semi-rotatable element (215) of the second lock/unlock device (210) in one direction or in the opposite direction, i.e. obtaining operation with simultaneous and concordant commands to control the locking or unlocking of the two rear wheels (RD,RS) of the hand-pushed vehicle.
